(19) Europäisches Patentamt
European Patent Office
Office européen des brevets

(11) Publication number: 0 013 485
B1

(12) EUROPEAN PATENT SPECIFICATION

(45) Date of publication of patent specification: 19.01.83

(21) Application number: 79302791.3

(22) Date of filing: 05.12.79

(51) Int. Cl.³: C 08 L 79/08, C 08 L 9/00, C 08 L 33/08, C 08 L 33/10, C 08 L 69/00

# (54) Thermoplastic polyglutarimide compositions and methods of making them.

(30) Priority: 08.12.78 US 967663

(43) Date of publication of application:
23.07.80 Bulletin 80/15

(45) Publication of the grant of the patent:
19.01.83 Bulletin 83/3

(84) Designated Contracting States:
BE CH DE FR GB IT NL SE

(56) References cited:
BE - A - 867 821
DE - A - 2 712 171
US - A - 3 162 695
US - A - 4 122 130

(73) Proprietor: Rohm and Haas Company
Independence Mall West
Philadelphia, Pennsylvania 19105 (US)

(72) Inventor: Mueller, Donald Scott
Rd No. 2 Pheasant Lane Box 258
Newtown, PA 18940 (US)

(74) Representative: Angell, David Whilton et al,
Rohm and Haas Company Patent Department
Chesterfield House Barter Street
London WC1A 2TP (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 013 485 B1

Courier Press, Leamington Spa, England.

# Thermoplastic polyglutarimide compositions and methods of making them

This invention is concerned with thermoplastic polymeric compositions and methods of making them. The technical field to which the invention relates is the attainment of satisfactory strengths in engineering plastics.

Belgian Patent 848,486 discloses certain improved polyglutarimides prepared by a noval process.

For many applications for engineering thermoplastics, impact strengths as measured by the notched Izod and the Gardner VHIT tests must meet certain standards. One standard is set by a product of the General Electric Company sold under the trademark Noryl 731 and comprises of a polyphenylene oxide and polystyrene blend, having a notched Izod of 3 (1.57 Nm/cm) and a Gardner VHIT of 100 inch-pound (11.28 Nm) at 25°C.

Although the Belgian patent did disclose that impact modifiers can be used in his novel polyglutarimides to improve their impact strength, there is no prior teaching how to achieve an impact strength in polyglutarimides equivalent to that of Noryl 731. This invention enables that to be achieved.

According to the invention there is provided a thermoplastic polymeric composition comprising a blend of

(a) at least one thermoplastic polymer containing imide units of the formula

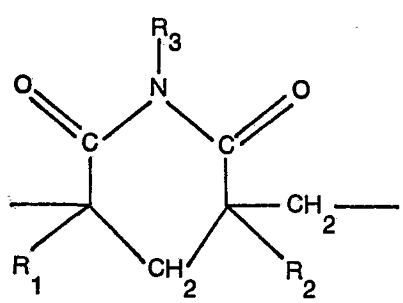

wherein $R_1$, $R_2$, and $R_3$ independently represent hydrogen or $C_1$ to $C_{20}$ unsubstituted or substituted alkyl, aryl, or mixtures thereof,

(b) a multiple stage polymer having a first stage polymerized from a predominantly butadiene or alkyl acrylate monomer system, and

(c) from 12—25% by weight of the blend of a polycarbonate.

The polyglutarimides to be used as component (a) in this invention may be any known in the art, but those produced in accordance with the aforementioned Belgian patent are greatly preferred. Particularly preferred is a blend of two such polymers in a weight ratio of from 1:2 to 2:1, one polymer having a Vicat value above 170°C and the other a Vicat value below 160°C.

The preferred glutarimide polymers are those which have been prepared from acrylic polymers such as poly (methyl methacrylate) and copolymers thereof by reaction in accordance with the aforementioned Belgian patent with ammonia or methyl amine so that about 1 to about 100% of the units in the polymer (in this preferred case acrylic ester groups) are imidized. The optimum results are obtained with degrees of imidization of about 20 to 60%. The weight average molecular weights of the glutarimide polymers are usually about 100,000 to 200,000.

The butadiene- or acrylic-based multiple stage polymer component (b) can be any of the ones suitable for impact modifying PVC.

Suitable butadiene-based multiple stage polymers include MBS (methacrylate-butadiene styrene) types and ABS (acrylonitrile-butadiene-styrene) types. For example, multiple stage polymers having a butadiene-styrene first stage, a styrene second stage, and a methyl methacrylate-styrene final stage or an acrylonitrile-styrene final stage can be used.

Suitable acrylic based multiple stage polymers can have a cross-linked butyl acrylate first stage and a methyl methacrylate final stage.

Ratios of rubber stage to hard stage can be from about 1:1 to about 9:1.

Suitable amounts of butadiene- or acrylic-based multiple stage polymer are typically about 5 to 40% by weight of the blend of components (a), (b) and (c). Preferably about 15 to 35% of this ternary blend is the multiple stage polymer.

Surprisingly and unexpectedly, the level of polycarbonate in the blend is critical for obtaining the desired notched Izod impact strength of greater than 3 (1.57 Nm/cm) and Gardner VHIT impact value above 100 inch-pounds (11.28 Nm) at 25°C. Although it is possible individually to obtain either of the two impact properties with other compositions and ratios, it is only when the polycarbonate comprises at least 12 percent by weight of the blend of components (a), (b) and (c) that both of the two impact properties are achieved. Upper limits of polycarbonate within the claimed range are not critical and are governed primarily by economics. Usually no more than 25% polycarbonate is cost-beneficial.

Suitable polycarbonates include any having a molecular weight (weight average) of at least about 20,000 up to about 1,000,000. Preferred molecular weights for the polycarbonate are about 20,000 to 40,000. Polycarbonates are well known commercially available materials.

The polyglutarimide preferably comprises about 20 to 80% of the blend, more preferably about 20 to 60%, and most preferably 30 to 60% by weight of the three components (a), (b) and (c).

The polycarbonate, polyglutarimide, and multiple stage polymer may be blended by melting together to form an "alloy". Generally the ingredients are dry blended with suitable stabilizers, pigments, fillers, reinforcing agents, or other additives, and then the blend is extruded at an elevated temperature, e.g. around 450 to 550°F. (232 to 288°C) and the resultant melt blend can either be fed directly to an injection moulding machine, or cooled and granulated for subsequent processing.

It is believed that there is a synergistic improvement in impact strength achieved by the combined incorporation of the multiple stage polymer and the polycarbonate at a level of at least 12% which is not achieved in polyglutarimide by incorporation of either the multiple stage polymer alone or the polycarbonate alone or at other levels of polycarbonate incorporation. Evidence of such synergism is given in the following Example.

Example

Polyglutarimide prepared in accordance with Belgian patent 848,486 and having a Vicat softening point of 168 to 172°C was blended at different ratios in a Killion extruder, using screw type 6A and zone temperatures 440°, 460°, and 470°F (227, 238 and 243°C), respectively, with polycarbonate and an MBS multiple stage polymer having a butadiene-based first stage comprising 75% by weight of the multiple stage polymer to produce Blends A, and Comparative Blends B and C as set forth below.

Blend A was 39% polyglutarimide, 41% multiple stage polymer, and 20% polycarbonate. Comparative Blend B was 56% polyglutarimide, 34% multiple stage polymer and 10% polycarbonate. Comparative Blend C was 59% polyglutarimide and 41% multiple stage polymer. Comparative Blend C has no polycarbonate.

The notched Izod impact strength at 25°C for the three blends was A = 3.31 ft.-lb./in., (1.77 Nm/Cm) B = 1.69 ft.-lb./in., (0.88 Nm/Cm) and C = 0.86 ft.-lb./in (0.47 Nm/Cm).

The Gardner VHIT impact strength at 25°C was A=120 in.-lbs. (13.5 Nm), B = 15 in.-lbs. (1.67 Nm), and C = 20 in.-lbs (2.26 Nm).

## Claims

1. A thermoplastic polymer composition comprising a blend of

(a) at least one thermoplastic polymer containing imide units of the formula

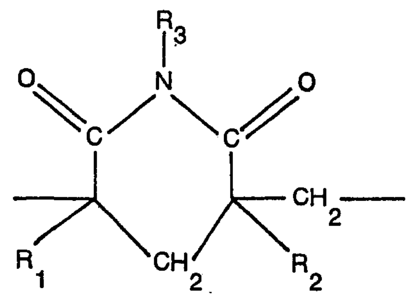

wherein $R_1$, $R_2$, and $R_3$ independently represent hydrogen or $C_1$ to $C_{20}$ unsubstituted or substituted alkyl, aryl, or mixtures thereof,

(b) a multiple stage polymer having a first stage polymerized from a predominantly butadiene or alkyl acrylate monomer system, and

(c) from 12—25% by weight of the blend of a polycarbonate.

2. A composition according to claim 1, wherein the polymer component (a) constitutes from 20 to 80%, by weight, of the blend of (a), (b) and (c).

3. A composition as claimed in claim 1 or 2, wherein component (a) comprises two polymers each containing imide units of the formula defined, one having a Vicat value about 170°C and the other having a Vical value below 160°C, the weight ratio of said two polymers being from 1:2 to 2:1.

4. A composition as claimed in any preceding claim wherein the multiple stage polymer (b) comprises MBS and/or ABS polymers.

5. A composition as claimed in any of claims 1 to 3 wherein the multiple stage polymer (b) has a crosslinked butyl acrylate polymer first stage and a methyl methacrylate final stage.

6. A composition as claimed in any preceding claim wherein the multiple stage polymer (b) has a relatively rubbery first stage and a relatively hard final stage, and the ratio of first stage to final stage is 1:1 to 9:1.

7. A composition as claimed in any preceding claim wherein component (c) has a weight average molecular weight of 20,000 to 1,000,000.

8. A method of making a thermoplastic polymeric composition which comprises blending together components (a), (b) and (c) as each defined in claim 1 in such a weight ratio that the blend contains 12 to 25% by weight, of the total of (a), (b) and (c), of component (c).

9. A method as claimed in claim 8 wherein the weight ratio is such that the blend contains

20 to 80% by weight, of the total of (a), (b) and (c), of component (a).

**Revendications**

1. Composition polymère thermoplastique comprenant un mélange de:
(a) au moins un polymère thermoplastique contenant des motifs imide de formule

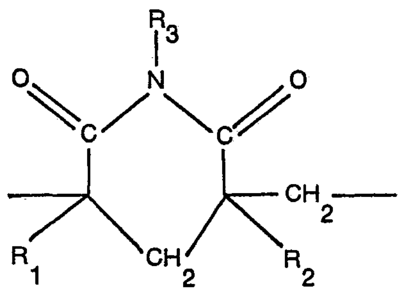

dans laquelle $R_1$, $R_2$ et $R_3$ représentent indépendamment l'hydrogène ou un groupe alkyle substitué ou non substitué en C 1—C 20 aryle ou leurs mélanges,
(b) un polymère à stades multiples ayant un premier stade polymérisé à partir d'un système monomère consistant principalement en butadiène ou un acrylate d'alkyle, et
(c) de 12 à 25% en poids, sur le poids total du mélange, d'un polycarbonate.

2. Composition selon la revendication 1, dans laquelle le composant polymère (a) représente de 20 à 80% du poids du mélange de (a), (b) et (c).

3. Composition selon la revendication 1 ou 2, dans laquelle le composant (a) comprend deux polymères contenant chacun des motifs imide présentant la formule définie, l'un ayant une valeur Vicat supérieure à 170°C et l'autre ayant une valeur Vicat inférieure à 160°C, le rapport en poids de ces deux polymères allant de 1:2 à 2:1.

4. Composition selon l'une quelconque des revendications qui précèdent, dans laquelle le polymère à stades multiples (b) comprend des polymères MBS et/ou ABS.

5. Composition selon l'une quelconque des revendications 1 à 3, dans laquelle le polymère à stades multiples (b) a un premier stade polymère d'acrylate de butyle réticulé et un stade final méthacrylate de méthyle.

6. Composition selon l'une quelconque des revendications qui précèdent, dans laquelle le polymère à stades multiples (b) a un premier stade relativement caoutchouteux et un stade final relativement dur, et le rapport du premier stade au stade final va de 1:1 à 9:1.

7. Composition selon l'une quelconque des revendications qui précèdent, dans laquelle le composant (c) a un poids moléculaire moyen de 20.000 à 1.000.000.

8. Procédé se préparation d'une composition polymère thermoplastique qui comprend le mélange ensemble des composants (a), (b) et (c) tels que définis chacun dans la revendication 1 à des proportions relatives en poids telles que le mélange contienne de 12 à 25% en poids, par rapport au total de (a), (b) et (c), du composant (c).

9. Procédé selon la revendication 8, dans lequel les proportions relatives en poids sont telles que le mélange contienne de 20 à 80% en poids, par rapport au total de (a), (b) et (c), du composant (a).

**Patentansprüche**

1. Thermoplastische polymere Masse aus einer Mischung aus
(a) wenigstens einem thermoplastischen Polymeren, das Imideinheiten der Formel

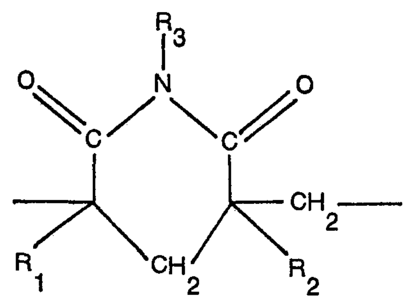

enthält, worin $R_1$, $R_2$ und $R_3$ unabhängig voneinander für Wasserstoff oder $C_1$—$C_{20}$-nichtsubstituierte oder -substituierte Alkyl- oder Arylreste oder Mischungen davon bedeuten,
(b) einem Vielstufenpolymeren mit einer ersten Stufe, die aus einem überwiegend aus Butadien oder einem Alkylakrylatmonomeren aufweisenden System polymerisiert worden ist,
(c) 12 bis 25 Gew.-%, bezogen auf das Gesamtgewicht der Mischung, eines Polycarbonats.

2. Masse nach Anspruch 1, dadurch gekennzeichnet, daß die Polymerkomponente a) 20 bis 80 Gew.-% der Mischung aus (a), (b) und (c) ausmacht.

3. Masse nach Anspruch 1 oder 2, dadurch gekennzeichnet, daß die Komponente (a) zwei Polymere aufweist, von denen jedes Imideinheiten der angegebenen Formel enthält und eine einen Vicatwert oberhalb 170°C und die andere einen Vicatwert unterhalb 160°C aufweist, wobei das Gewichtsverhältnis der zwei Polymeren 1:2 bis 2:1 bebeträgt.

4. Masse nach einem der vorhergehenden Ansprüche, dadurch gekennzeichnet, daß das Vielstufenpolymere (b) MBS- und/oder ABS-Polymere aufweist.

5. Masse nach einem der Ansprüche 1 bis 3, dadurch gekennzeichnet, daß das Vielstufenpolymere (b) eine erste Stufe aus einem vernetzten Butylakrylatpolymerem und eine Endstufe aus einem Methylmethacrylatpolymeren aufweist.

6. Masse nach einem der vorhergehenden Ansprüche, dadurch gekennzeichnet, daß das Vielstufenpolymere (b) eine erste Stufe aus einem relativ kautschukartigen Polymeren und eine Endstufe aus einem relativ harten Polymeren aufweist, wobei das Verhältnis der ersten Stufe zu der Endstufe 1:1 bis 9:1 beträgt.

7. Masse nach einem der vorhergehenden Ansprüche, dadurch gekennzeichnet, daß die Komponente (c) ein Gewichtsmittel des Molekulargewichts von 20000 bis 1000000 besitzt.

8. Verfahren zur Herstellung einer thermoplastischen polymeren Masse, dadurch gekennzeichnet, daß die Komponenten (a), (b) und (c) gemäß Anspruch 1 in einem solchen Gewichtsverhältnis vermischt werden, daß die Mischung 12 bis 25 Gew.-%, bezogen auf die Gesamtmenge (a), (b) und (c), der Komponenten (c) enthält.

9. Verfahren nach Anspruch 8, dadurch gekennzeichnet, daß das Gewichtsverhältnis derart ist, daß die Mischung 20 bis 80 Gew.-%, bezogen auf die Gesamtmenge an (a), (b) und (c), der Komponente (a) enthält.